**Europäisches Patentamt**

**European Patent Office**

**Office européen des brevets**

(19)

(11) Veröffentlichungsnummer : **0 518 810 A1**

(12) **EUROPÄISCHE PATENTANMELDUNG**

(21) Anmeldenummer : **92810354.8**

(22) Anmeldetag : **12.05.92**

(51) Int. Cl.⁵ : **D03D 51/00**, G05B 19/417

(30) Priorität : **12.06.91 CH 1752/91**

(43) Veröffentlichungstag der Anmeldung :
**16.12.92 Patentblatt 92/51**

(84) Benannte Vertragsstaaten :
**BE DE FR IT**

(71) Anmelder : **GEBRÜDER SULZER
AKTIENGESELLSCHAFT
Zürcherstrasse 9
CH-8401 Winterthur (CH)**

(72) Erfinder : **Mehltretter, Karl
Im Grüntal
CH-8405 Winterthur (CH)**
Erfinder : **Hiestand, Rudolf
Riedstrasse 27
CH-8352 Räterschen (CH)**
Erfinder : **Karcher, Andreas
Epptingerstrasse 6
W-7500 Karlsruhe 1 (DE)**
Erfinder : **Oberle, Thomas
Stäpfetlistrasse 5
CH-8606 Werrikon (CH)**

(54) **Verfahren und Vorrichtung zum Herstellen von Geweben mit Webmaschinen.**

(57) Die Vorrichtung zum Herstellen von Geweben besteht aus einem Rechner (1) mit Bildschirm (2), Tastatur (3) und Drucker (9) sowie einer Kommunikationsverbindung (4) zu mindestens einer Webmaschine (6). Das Verfahren erlaubt in einem ersten Schritt ein Gewebe webmaschinenunabhängig vollständig zu beschreiben. In einem zweiten Schritt werden zur Beschreibung eines Artikels alle maschinenspezifischen Anpassungen berücksichtig. Als dritter Schritt wird mit den Informationen eines Artikels ein Webauftrag generiert, der alle Daten enthält, die für die Produktion von Bedeutung sind. Dem Rechner (1) stehen in einer Datenbank Material-Daten von Geweben, Maschinen-Einstelldaten, Maschinen-Ausrüstdaten usw. zur Verfügung, sodass neben Plausibilitäts- und Konsistenzkontrollen der Rechner (1) auch diejenigen Webmaschinen ermitteln kann, welche für das Herstellen des Artikels geeignet sind. Die spezifischen Maschineneinstelldaten werden ermittelt und der Webmaschine zugeführt.

F i g.2

EP 0 518 810 A1

Die Erfindung betrifft ein Verfahren zum Herstellen von Geweben mit Webmaschinen und eine Vorrichtung zur Durchführung des Verfahrens.

Die durch den Einsatz moderner Mikroprozessor-Steuerungen ständig zunehmende Komplexität und Funktionalität heutiger Webmaschinen lässt deren effizienten Einsatz zu einer immer grösseren Herausforderung für den Bediener werden. Im gleichen Masse wie die Möglichkeiten zur flexiblen und optimalen Nutzung der Webmaschinen für die verschiedensten Einsatzbereiche zunehmen, steigen auch die Anforderungen an das Bedien- und Servicepersonal.

So lassen sich auch die modernen Websysteme kaum noch sinnvoll und zeitsparend ohne entsprechende Hilfsmittel und Werkzeuge einsetzen. Mehr und mehr halten Computer Einzug in Websäle und Meisterbüros. Auch und gerade im direkten Umfeld der Webmaschinen gewinnt der Einsatz rechnergestützter Werkzeuge immer mehr an Bedeutung.

Aus US-Patent Nr. 4,835,699 ist ein interaktives, verteiltes, automatisches Ansteuerungs- und Überwachungssystem für Webmaschinen bekannt. Ein Zentralrechner, der über Kommunikationsleitungen mit mehreren Webmaschinen Daten austauscht, steuert und überwacht alle Webmaschinenaktivitäten eines Websaales in Echtzeit. Während dem Webvorgang kann der Webprozess durch Parameter wie z.B. Maschinenstops, die Gründe für Maschinenstops oder die Produktionsrate überwacht und für statistische Zwecke ausgewertet sowie auch zur Fehlererkennung und Fehlerbehebung berücksichtigt werden.

Der Zentralrechner hat Zugriff auf eine Artikeldatenbank, in der die entsprechenden Webmaschineneinstellparameter und deren Werte gespeichert sind. Bei einem Artikelwechsel werden die neuen, elektrisch veränderbaren Einstellgrössen über die Kommunikationsleitung auf die Webmaschinen geladen. Webmaschineneinstellungen können somit schnell und fehlerfrei durchgeführt werden. Das System eignet sich zudem, die Einstellparameter der Artikeldatenbank zu optimieren, indem während dem Webprozess Daten erfasst, statistisch ausgewertet und die Einstellparameter in der Artikeldatenbank korrigiert werden. Das System stützt sich jedoch immer auf einen bereits bestehenden Datensatz von Einstellparametern, der verändert wird, und ist daher nicht in der Lage, ausgehend von Gewebedaten und unter Berücksichtigung des Webverfahrens die geeigneten Einstellparameter und deren Werte sowie ev. benötigte zusätzliche Teile zu bestimmen.

Hier schafft die Erfindung Abhilfe. Sie löst die Aufgabe auf Grund von Gewebedaten eine geeignete Webmaschine auszuwählen und eine optimale Ersteinrichtung aller Webmaschineneinstellungen sowie aller produktionsbezogenen Daten und Handlungsschritte zu erzielen.

Das erfindungsgemässe Verfahren bietet Hilfsmittel, die einen effizienten und bedienungsfreundlichen Einsatz von Websystemen unterstützt. Der Schwerpunkt liegt dabei auf maschinennahen Funktionen, die die Prozesse und Aktivitäten im direkten Umfeld einer Webmaschine / Webmaschinengruppe optimieren. Damit erfolgt eine deutliche Abgrenzung gegen klassische Weberei-Leitsysteme.

Durch rechnergestütztes Erstellen und Verwalten aller für das Handling der Webmaschinen benötigten Informationen und Daten erfolgt eine Unterstützung des Bedienpersonals und ist eine höhere Reproduzierbarkeit von Gewebequalität erreichbar.

Das weitgehend graphische, an den Bedürfnissen des Weberei-Fachpersonals orientierte Bedienkonzept ermöglicht auch ohne EDV-Systemkenntnisse einen effizienten Einsatz des Systems und hilft Bedien- und Eingabefehler zu vermeiden. Ein integriertes Hilfesystem bietet dem Bediener jederzeit Informationen und Hilfestellungen zu den aktuellen Bearbeitungspunkten und erleichtert dadurch die Einarbeitungsphase.

Durch die Möglichkeit der Integration in übergeordnete Weberei-Leitsysteme werden die Funktionen der erfindungsgemässen Vorrichtung auch von der Prozessleitebene aus zugänglich.

Die erfindungsgemässe Vorrichtung verfolgt das Ziel, in der gesamten Produktionskette diejenigen Arbeiten und Tätigkeiten zu unterstützeun, die stark auf den Webprozess selbst zugeschnitten sind.

Die Vorrichtung zum Herstellen von Geweben besteht aus einem Rechner mit Bildschirm, Tastatur und Drucker sowie einer Kommunikationsverbindung zu mindestens einer Webmaschine. Das Verfahren erlaubt in einem ersten Schritt ein Gewebe webmaschinenunabhängig vollständig zu beschreiben. In einem zweiten Schritt werden zur Beschreibung eines Artikels alle maschinenspezifischen Anpassungen berücksichtig. Als dritter Schritt wird mit den Informationen eines Artikels ein Webauftrag generiert, der alle Daten enthält, die für die Produktion von Bedeutung sind. Dem Rechner stehen in einer Datenbank Material-Daten von Geweben, Maschinen-Einstelldaten, Maschinen-Ausrüstdaten usw. zur Verfügung, sodass neben Plausibilitäts- und Konsistenzkontrollen der Rechner auch diejenigen Webmaschinen ermitteln kann, welche für das Herstellen des Artikels geeignet sind. Die spezifischen Maschineneinstelldaten werden ermittelt und der Webmaschine zugeführt.

Die Gewebe werden aufgrund von Ideen, Gewebe-Dekompositionen oder durch Übernahme der Daten von CAD-Systemen in Gewebe-Spezifikationen beschrieben und abgelegt. Bei Gewebe-Spezifikationen handelt es sich um neutrale und zu diesem Zeitpunkt noch maschinenunabhängige Beschreibungen eines schaftgemusterten Gewebes.

In einem Anlagenüberblick werden dem Bediener in graphischer Form die in der Anlage projektierten Maschinen angezeigt. Von hier aus sind sämtliche System-Module zugänglich und werden die verfügbaren Webmaschinen, Artikel, Ausrüstungsteile, Rohstoffe und Einstelldatensätze verwaltet.

Eine wesentliche Aufgabe besteht darin, ein in einer Gewebe-Spezifikation beschriebenes Gewebe auf eine bestimmte Webmaschine, und zwar in einer bestimmten Anzahl Bahnen und mit entsprechender Kantenbildung, zu disponieren. Dieser Bearbeitungsschritt ist stark vom zugänglichen Websystem abhängig und erfordert ein hohes Mass sowohl an textiltechnischem als auch an webmaschinenspezifischem Know-How.

Die Übernahme eines Artikels in den eigentlichen Webprozess erzeugt einen Webauftrag. Dieser enthält alle Informationen, mit denen die Maschine produktionsbereit gemacht werden kann. Durch Abgleich mit der aktuellen Maschinendisposition können die auszuwechselnden Teile abgeleitet werden. Elektronische Einstellwerte werden direkt über Kommunikationsverbindungen oder über einen entsprechenden Datenträger auf die Webmaschinen übertragen. Die mechanischen Einstellungen werden entsprechend angezeigt und bei Bedarf ausgedruckt. Durch Übernahme von Grundeinstellwerten und artikelspezifischen Basiseinstellungen sowie durch Plausibilitätsprüfung und möglichst weitgehende Konsistenzüberprüfung, erhält der aus dem Dispositionsvorgang resultierende Datensatz eine gewisse Basisqualität. Die Übertragung dieser Werte auf die Maschine garantiert somit ein befriedigendes Anlaufverhalten der Maschine.

Der aus dem Webprozess zurückfliessende und unter Umständen geänderte und optimierte Webauftrag kann um Erfahrungswerte, Bemerkungen und Laufdaten ergänzt und danach archiviert werden. Diese Informationen sind somit für alle folgenden Erstellungen von Webaufträgen verfügbar. Dadurch erfolgt eine fortlaufende Erweiterung der Datenbank um artikelspezifische Einstelldatensätze und Erfahrungswerte. Bei allen weiteren Arbeiten kann auf die bereits gespeicherten Daten zurückgegriffen werden. Dies kommt insbesondere der Reproduzierbarkeit von Gewebequalität entgegen.

Im folgenden wird die Erfindung anhand von einem Ausführungsbeispiel beschrieben. Es zeigt

Fig 1. ein schematisches Blockdiagramm der erfindungsgemässen Vorrichtung mit Rechner und Webmaschinen;

Fig 2. eine schematische Darstellung von Rechner und Webmaschinen mit einer Variante zur Datenübertragung;

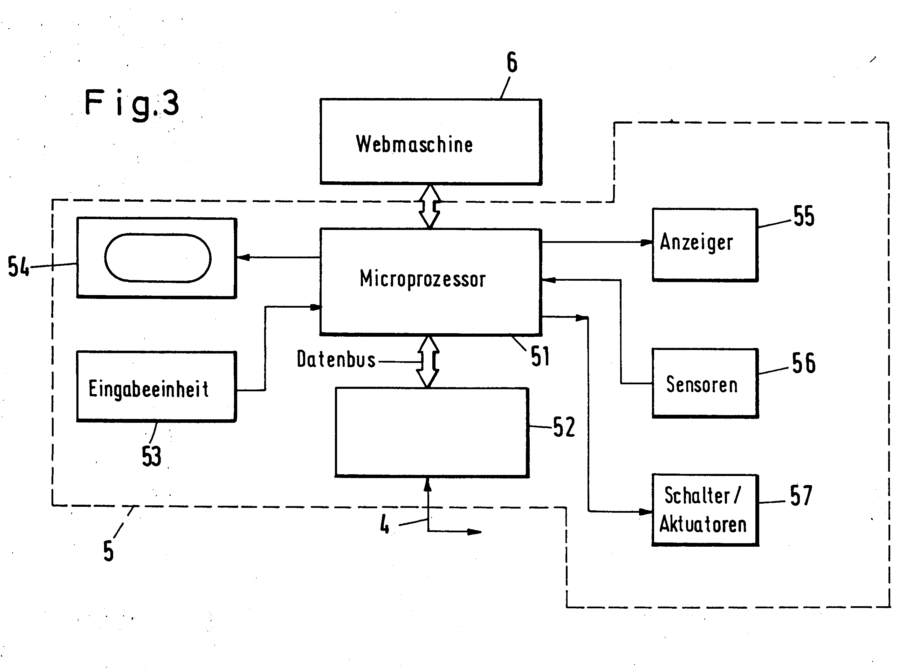

Fig 3. ein schematisches Blockdiagramm als Beispiel für einen Mikrokontroller, wie er auf Webmaschinen eingesetzt wird;

Fig. 4 schematische Darstellung des Datenbanksystems mit der Aufteilung in Entitätsmengen;

Fig. 5 Entitätsmenge für Garne;

Fig. 6 Entitätsmenge zur Gewebespezifikation;

Fig. 7 ein Flussdiagramm für die Erstellung einer vollständigen Artikelbeschreibung;

Fig. 8 die Gliederung der grafischen Eingabe zur Gewebedisposition;

Fig. 9 Entitätsmenge zur Gewebedisposition;

Fig. 10 Entitätsmenge zum Artikel;

Fig. 11 Entitätsmenge zur Webmaschinenspezifikation;

Fig. 12 ein Flussdiagramm für die Erstellung eines Webauftrages auf Grund eines Artikels;

Fig. 13 Entitätsmenge zur Webmaschinendisposition.

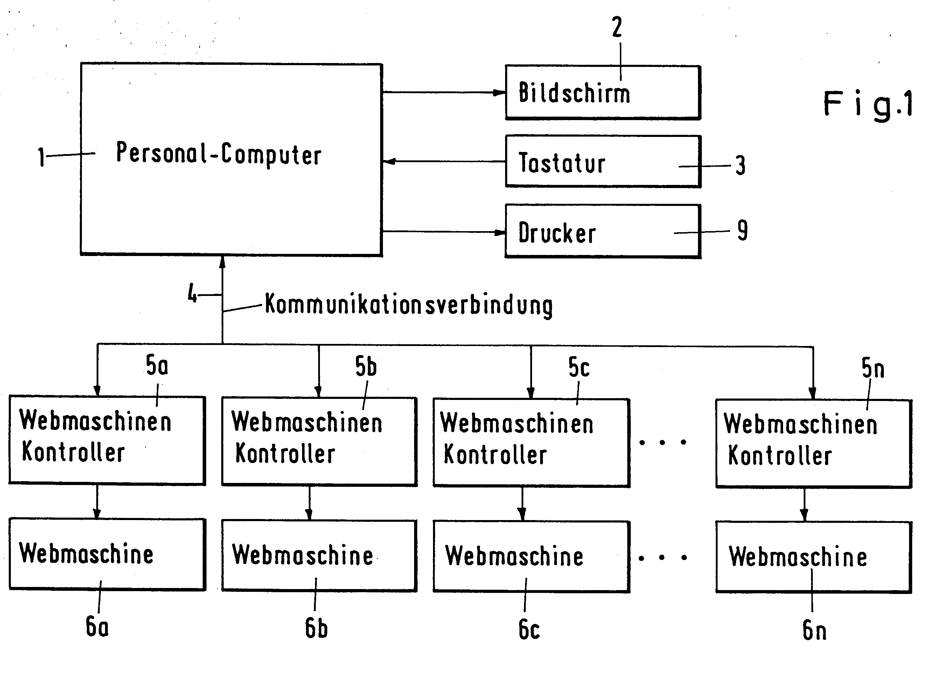

Fig. 1 zeigt ein Blockdiagramm einer Vorrichtung zum Auswählen, Einrichten und Überwachen von Webmaschinen, wie sie für die vorliegende Erfindung vorzugsweise verwendet wird. Das Rechnersystem besteht aus einem Personal-Computer 1 mit einem Bildschirm 2 sowie einer Tastatur 3 und einem Drucker 9. Kommunikationsmittel wie z.B. eine Kommunikationsverbindung 4 ermöglichen einen Datenaustausch zwischen dem Rechner 1 und einer oder mehreren Webmaschinen 6a-6n. In der bevorzugten Ausführungsart sind die Webmaschinen 6a-6n je mit einem lokalen Mikrokontroller 5a-5n ausgerüstet, der die Webmaschine überwacht und die Verbindung zum Rechner 1 sicherstellt. Die bevorzugten Webmaschinen 6 stammen von Sulzer-Rüti. Der Rechner 1 kann mit einer in der vorliegenden Figur nicht eingezeichneten Kommunikationsmöglichkeit auch Daten mit einem übergeordneten Leitsystem austauschen.

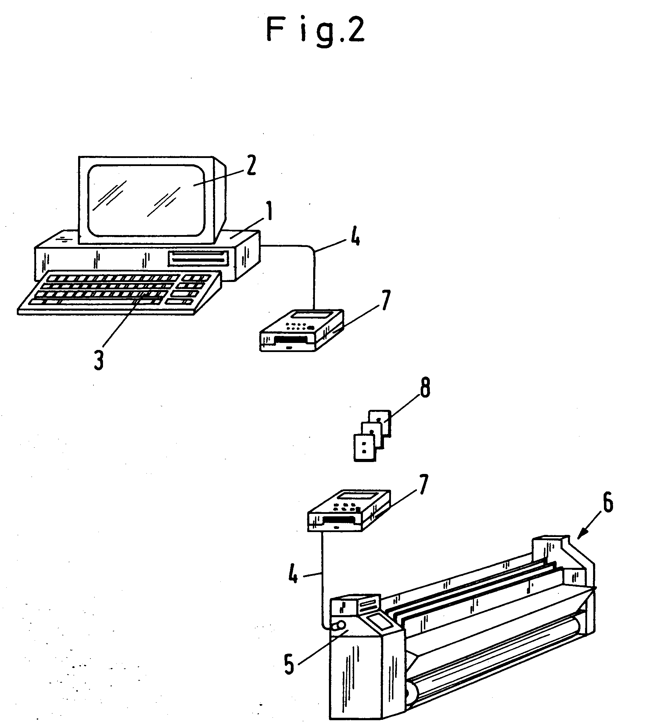

Wie in Fig. 2 dargestellt kann der Datentransfer zwischen Rechner 1 und Webmaschine 6 z.B. auch mit Memory-Card-Stationen 7 und Memory-Cards 8 erfolgen. Der bidirektionale Datenaustausch zwischen Rechner 1 und Webmaschine 6 erfolgt nicht mehr in Echtzeit. Trotzdem kann das erfindungsgemässe Verfahren sowie die erfindungsgemässe Vorrichtung verwendet werden.

Jede Webmaschine 6 der bevorzugten Art enthält einen Kontroller 5 mit einem lokalen Mikroprozessor 51, der die Kommunikationsverbindung 4 zum Rechner 1 oder zur Memory-Card-Station 7 bedient und den Betrieb der Webmaschine 6 überwacht. Im bevorzugten Kontroller 5 bedient der Mikroprozessor 51 zusätzlich ein Bildschirm 54, eine taktile Eingabeeinheit 53 sowie mehrere Anzeigen 55, mehrere Sensoren 56 als auch Schalter und Aktuatoren 57. Der zum Stand der Technik gehörende Kontroller 5 überwacht praktisch alle Operationen der Webmaschine 6 und überwacht zusätzliche mit dem Webprozess verbundene Parameter.

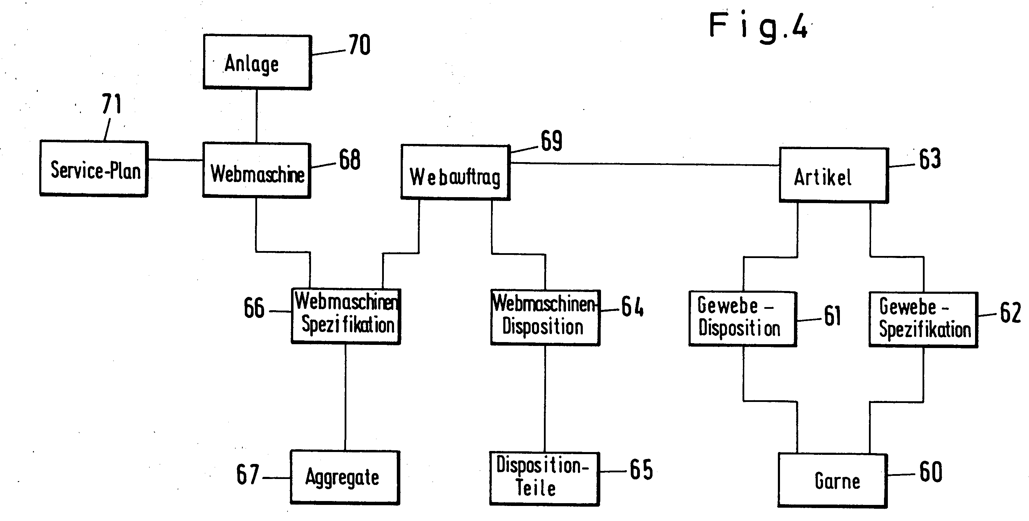

Der interaktive Dialog mit dem Rechner 1 erlaubt die Erstellung eines vollständigen Webauftrages, was im Wesentlichen die gesamte Webmaschinendisposition mit allen elektrischen und mechanischen Einstellungen sowie den benötigten Zusatzteilen umfasst als auch die Produktionsdaten. Der bedienungsfreundliche Dialog schlägt dem Benutzer so weit als möglich gültige Eingabewerte zur Auswahl vor und überprüft jede Eingabe auf Konsistenz und Plausibilität. Dies erfordert unter anderem ein strukturiertes Datenbanksystem mit Kern-Entitäten wie sie in Fig. 4 schematisch dargestellt sind. Etwa 700 Attribute sind dadurch auf sinnvolle Art gegliedert.

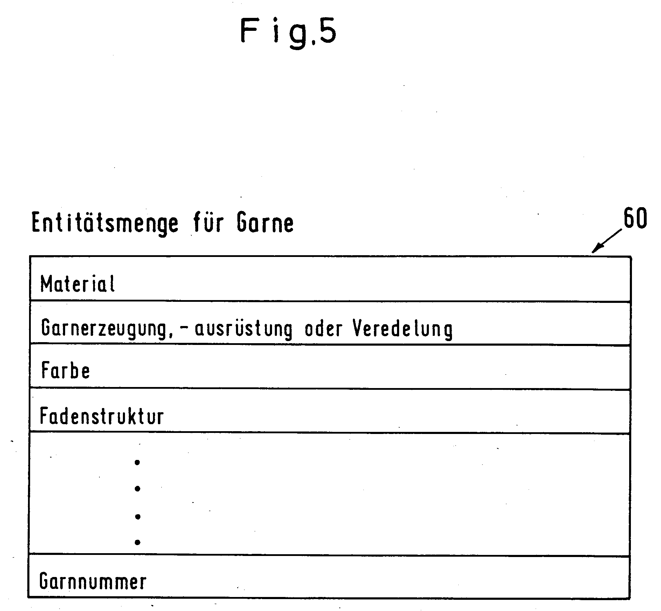

Die charakteristischen Merkmale von Garnen sind in einer entspechenden Entitätsmenge 60 abgelegt. Fig. 5 zeigt eine Auswahl von Attributen der Entitätsmenge für Garne 60. Sie umfasst z.B. die Art des Materials, die Garnerzeugung, die Farbe, die Fadenstruktur oder die Garnnummer. Im Datenbanksystem wird dadurch eine Bibliothek mit den charakteristischen Merkmalen verschiedener Garne aufgebaut. Diese Biblothek kann vom Benutzer interaktiv bearbeitet so z.B. verändert oder erweitert werden.

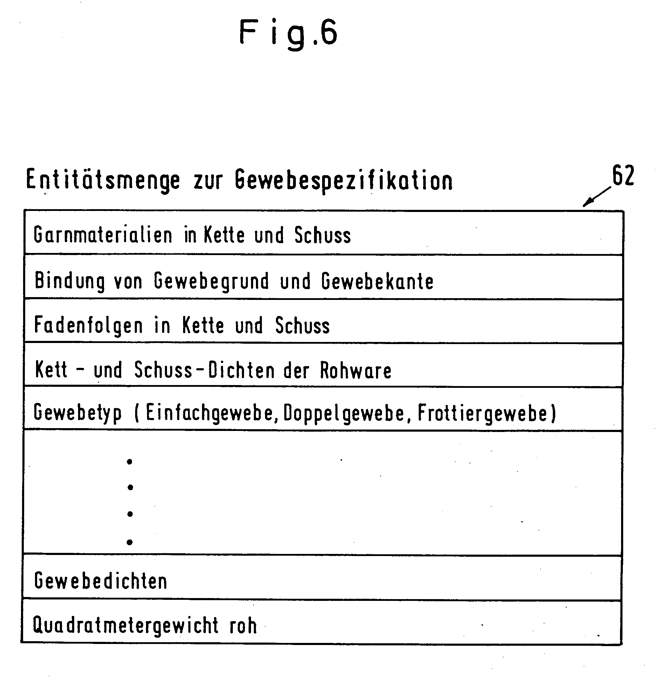

Die neutrale Beschreibung eines schaftgemusterten Gewebes wird im folgenden als Gewebespezifikation 62 bezeichnet. Neutral bedeutet in diesem Zusammenhang, dass die Beschreibung maschinenunabhängig erfolgt und die Warenbreite nicht berücksichtigt wird. Es wird zwischen Gewebegrund und Gewebekante unterschieden. Fig. 6 zeigt die Entitätsmenge zur Gewebespezifikation 62 mit einer Auswahl von Attributen wie Garnmaterial in Kette und Schuss, Bindung von Gewebegrund und Gewebekante, Fadenfolge in Kette und Schuss, Kett- und Schuss-Dichte der Rohware oder Gewebetyp.

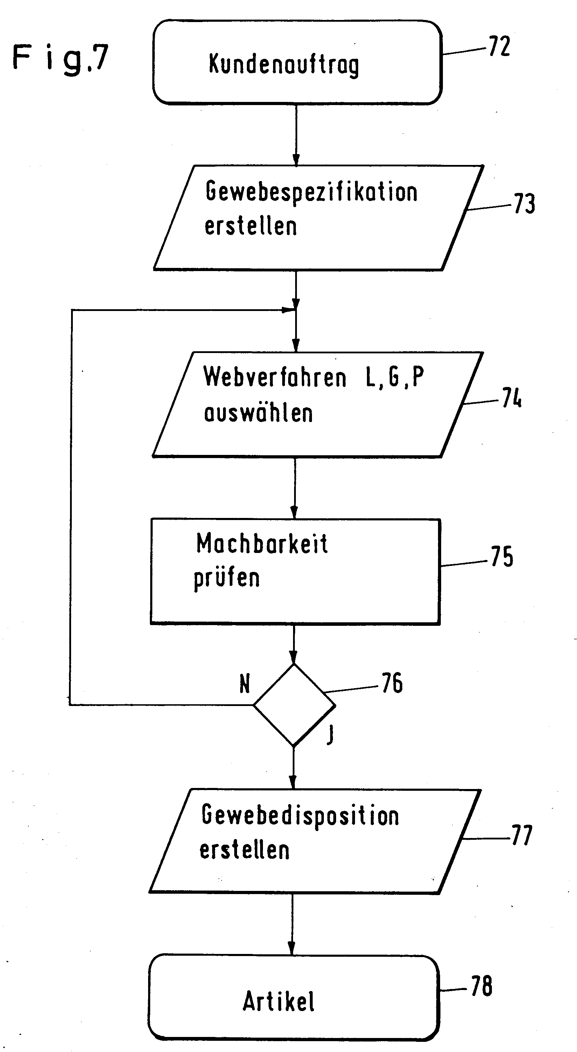

Der Ablauf zur vollständigen Beschreibung eines Artikels 78 ist in Fig. 7 dargestellt. Ein Gewebe wird aufgrund der Auftragsdaten 72 eines Kunden, einer Gewebe-Dekomposition oder durch Übernahme von einem Textil-Design-System in einem folgenden Schritt durch die Gewebespezifikation vollständig beschrieben und die Werte der entsprechenden Attribute als Gewebespezifikation 62 archiviert. Nach der Auswahl eines bekannten Garnmateriales aus der Rohstoffbibliothek 60 können während der Gewebespezifikation 73 die restlichen Entwicklungsschritte unabhängig voneinander und in jeder beliebigen Reihenfolge interaktiv durchgeführt werden. Die Schritte sind:

- Entwicklung der Kett- und Schuss-Fadenfolge
- Entwicklung des Kett- und Schuss-Dichteprofils
- Entwicklung des Florhöhenprofils
- Konstruktion der Bindung
- Erfassung von Bindungsname und Bindungsfaktoren
- Erfassung von Artikelgruppen-Zugehörigkeit und Quadratmetergewicht
- Berechnung der Gewebe- und Richtwertdichten

Dabei dient ein grafischer Muster-Editor zur Konstruktion der Bindung, zum Einfärben der Fadenfolgen und zur Anzeige der Dichteprofile. Es wird zwischen Gewebegrund 85 und Gewebekante 86 unterschieden.

Nach der maschinenneutral beschriebenen Gewebespezifikation 62 wird in Fig.7 in einem folgenden Schritt 74 interaktiv ein Webverfahren (Luft,Projektil,Greifer) ausgewählt und daraufhin untersucht, ob das Gewebe auf einer Webmaschine des gewählten Webverfahrens disponierbar ist. Die von Rechner selbständig durchgefürhte Machbarkeitsüberprüfung 75 untersucht die folgenden Kriterien: Aus der Gewebespezifikation 62 stehen folgende Grössen zur Verfügung:

- die verwendeten Garnmaterialien
- die Bindung von Gewebegrund und Gewebekante
- die Fadenfolgen in Kette und Schuss
- die Kett- und Schuss-Dichten im Rohgewebe
- die Gewebedichte
- die Gewebebahnrohbreite

Über das eingesetzte Webverfahren stehen aus der Webmaschinenspezifikation 66 folgende Grössen zur Verfügung:

- die verarbeitbaren Garne
- die minimalen, maximalen Garnnummern
- die maximale Anzahl der Schäfte
- die maximale Anzahl der Schussgarne
- die minimale, maximale Schussdichte
- die maximal verarbeitbaren Gewebedichten
- die minimale Gewebebahnbreite im Webblatt

Die Gegenüberstellung der soeben erwähnten Kenngrössen erlaubt es dem Rechensystem mit Hilfe eines Algorithmus zu überprüfen, ob das Gewebe generell mit dem gewählten Webverfahren machbar ist.

Gemäss Fig.7 wird, nach der Bestätigung der Machbarkeit, basierend auf der maschinenneutralen Beschreibung des Gewebes (Gewebespezifikation 62) die Gewebedisposition interaktiv erstellt. Die folgenden Grössen werden vom Benutzer interaktiv abgefragt: Gewebebahn Rohbreite, Kantentyp, Bahnentrennung, Anzahl der Bahnen sowie Anzahl der Webblätter. Daraus leitet das System die Breite im Webblatt (Gewebegrund, Gewebekante, Gassen und Hilfskanten), die Anzahl benötigter Kettfäden sowie die Rettdichte im Webblatt ab.

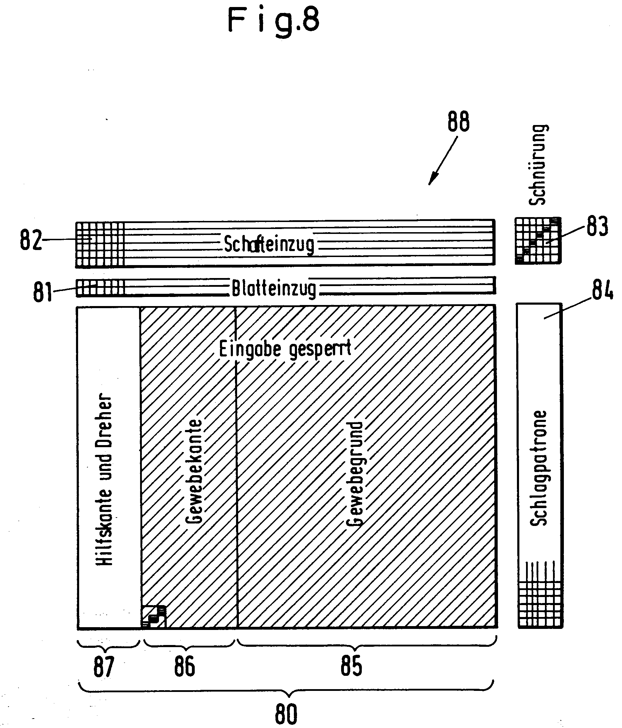

Luft-, Greifer- und Projektil-Eintragssysteme erfordern spezielle, vom Webverfahren abhängige Hilfskanten und/oder Dreherkanten. Die Konstruktion der hierfür notwendigen Hilfskanten- und Dreherbindungen werden in der Gewebedisposition interaktiv mit einem grafischen Muster-Editor gemäss Fig.8 durchgeführt. Das Gewebe 80 wird vom System in die Bindungsbereiche Gewebegrund 85, Gewebekante 86 und Hilfskante 87 unterschieden. Die Gewebebindung, bestehend aus Gewebegrund 85 und Gewebekante 86, wird automatisch aus der verwendeten Gewebespezifikation 62 übernommen und auf dem Bildschirm 2 in Form eines Patronenpapiers 88 dargestellt. Die Gewebebindung 85,86 kann jedoch nicht mehr editiert werden und wird deshalb entsprechend gekennzeichnet. Links von der Gewebekante 86 stehen weitere Kettfäden zur Eingabe von Hilfskantenund/oder Dreherbindungen 87 zur Verfügung. Abhängig vom Kantentyp und Bahnentrennung können eine Hilfskantenbindung und/oder eine Dreherbindung eingegebenwerden. Die Unterscheidung von drei Bindungsbereichen erlauben dem System zu überprüfen, ob die Kantenbildung korrekt eingestellt wurde. Kantenfehler können somit vom System erkannt und durch entsprechende Hinweise vermieden werden. Das System liefert Hinweise über die Notwendigkeit vom Abbindefäden oder Dreherbindungen. Die Festlegung des Schafteinzuges 82 wird ebenfalls mit dem grafischen Muster-Editor gemäss Fig.8 durchgeführt. Dabei können Standard-Schafteinzüge aus einer Bibliothek ausgewählt werden oder die Einzüge manuell eingegeben werden, wobei dabei drei Fälle unterschieden werden:

1. Ein Kettfaden soll in einen leeren Schaft eingezogen werden. Diese Eingabe wird akzeptiert.

2. Ein Kettfaden soll in einen Schaft eingezogen werden, in den bereits ein gleichbindender Kettfaden einge fädelt ist. Diese Eingabe wird ebenfalls akzeptiert.

3. Ein Kettfaden soll in einen Schaft eingezogen werden, in den bereits ein andersbindender Kettfaden einge fädelt ist. Diese Eingabe wird nicht akzeptiert, weil ansonsten die Bindung an den geänderten Schafteinzug angepasst werden müsste.

Die Eingabe des Blatteinzuges 81 erfolgt interaktiv, indem jeder Kettfaden in einem Rohr eingezogen wird.

Als ein Ergebnis der Gewebedisposition 77 liegen die Fadenzahlen für Gewebegrund, Gewebekante, Hilfs- und Dreherkante je Gewebebahn vor. Ebenfalls bekannt sind die Einzugsrapporte der zugehörigen Bindungen.

Das Verfahren ermittelt aus diesen Grössen automatisch die Wiederholungsfaktoren für die jeweiligen Einzugsrapporte und stellt die Einziehvorschrift über einem Patronenpapier dar. Die Einziehvorschrift zeigt den Schaft- und Blatteinzug über die gesamte Einzugsbreite unter Berücksichtigung eventueller Gassen. Wenn Fadenzahl und Einzugsrapport nicht aufgehen, erscheinen die Restfäden jeweils rechts vom Einzugsrapport. In der Einziehvorschrift werden eventuell benötigte Steppfäden definiert. Die Schlagpatrone 84 kann nach diesem Arbeitsschritt vom System automatisch abgeleitet werden.

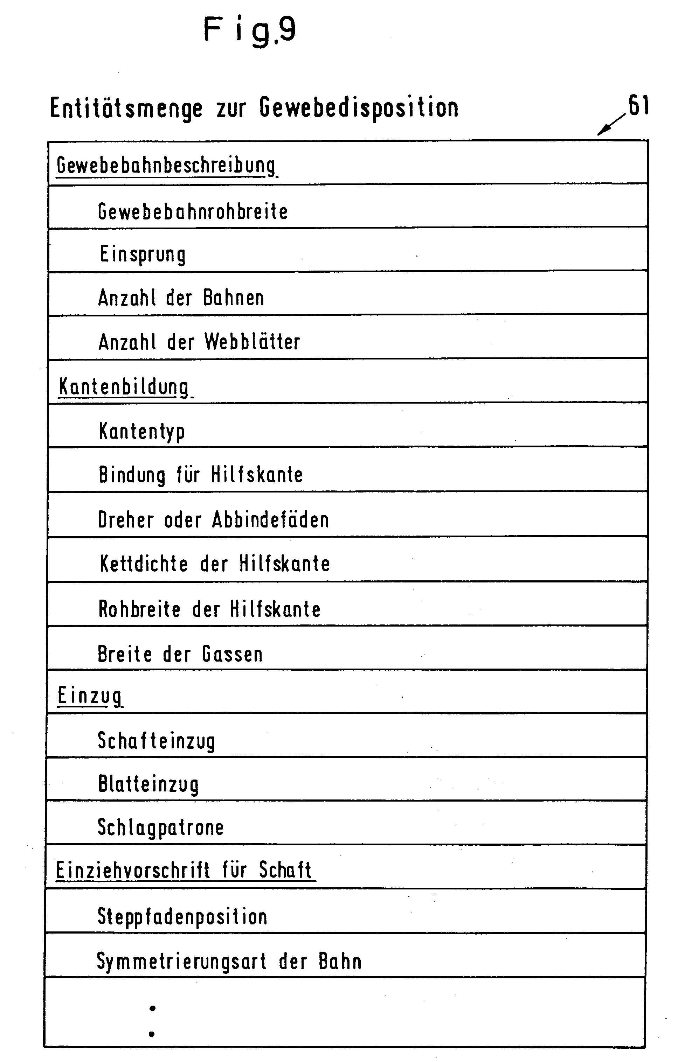

Nach erfolgter Gewebedisposition werden die Werte der Attribute in einer entsprechenden Entitätsmenge Gewebedisposition 61 abgelegt. Fig. 9 zeigt eine Auswahl von Attributen der Entitätsmenge der Gewebedisposition 61.

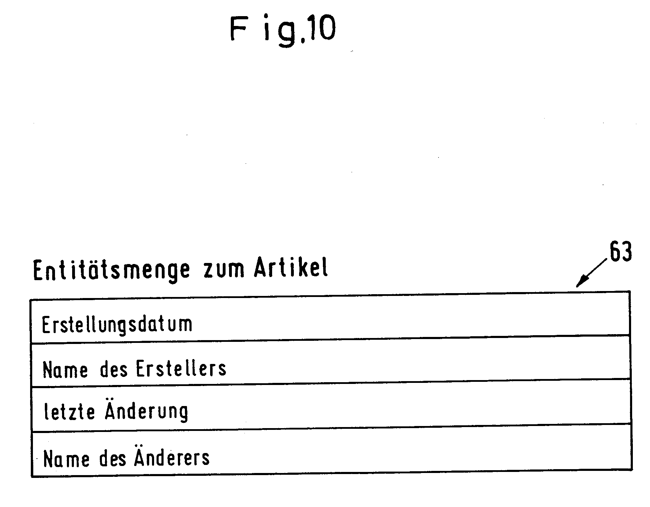

Gemäss Fig. 10 setzt sich die Entitätsmenge für die Artikel 63 aus den Attributen Erstellungsdatum, Ersteller, letzte Änderung sowie Änderer zusammen. Weiter sind an einen einzelnen Artikel 63 dessen Gewebespezifikation 62 sowie dessen Gewebedisposition 61 angebunden. Das Handling der Artikel erfolgt über einen Artikel-Manager. Dieser bietet komfortabel Verwaltungsfunktionen für die Artikeldaten an, wie z.B. Suchen und Sortieren anch beliebigen Kriterien. Des weiteren bildet der Artikel-Manager den Zugang zur Bearbeitung von Gewebe-Spezifikation und -Disposition. Über die Artikeldatenbank in der Artikleverwaltung sind alle für die Produktion eines Artikels auf einer bestimmten Webmaschine erforderlichen Daten festgelegt. Damit ist die Vollständigkeit der Information für einen kompletten Webauftrag gewährleistet. Für den Anwender bedeutet dies raschere Artikelwechsel, kürzere Stillstandszeiten, wirtschaftliche Machbarkeit auch von kleinen Losgrössen und Unterstützung von "Just in Time-Produktion".

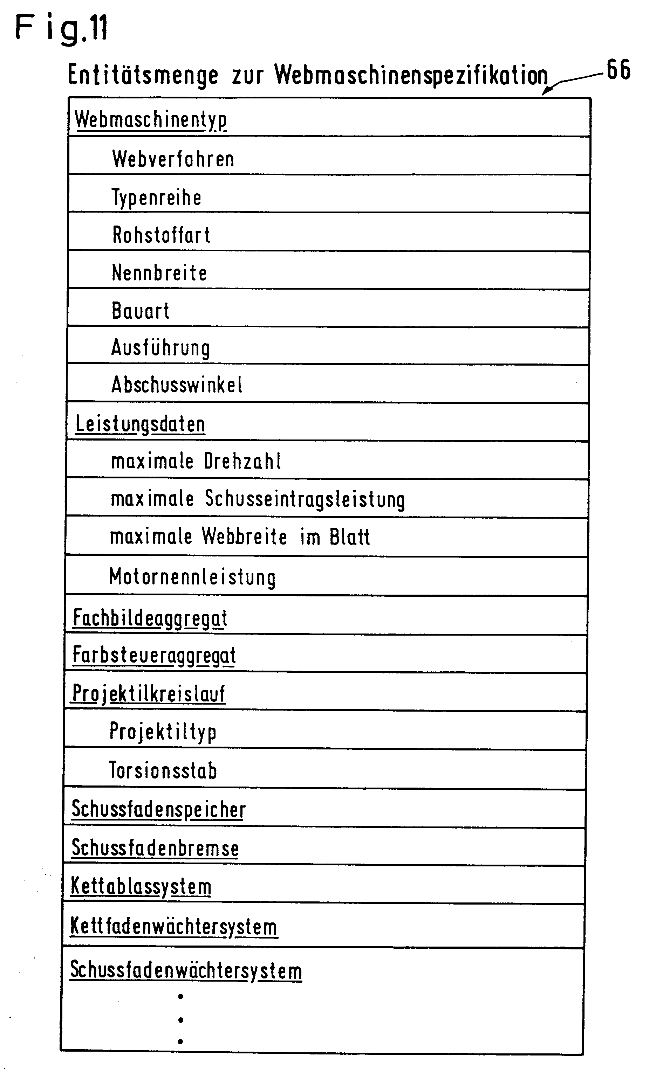

Die charakteristischen Merkmale der Webmaschinen sind in einer entsprechenden Spezifikation abgelegt. Fig.11 zeigt eine Auswahl von Attributen der Entitätsmenge für die Webmaschinenspezifikation 66. Die Integration neuer Maschinen in die Datenbank erfolgt durch Abfrage der Maschinenspezifikation. Diese erfolgt strukturiert nach Maschinengrundmerkmalen und Hauptfunktionsgruppen.

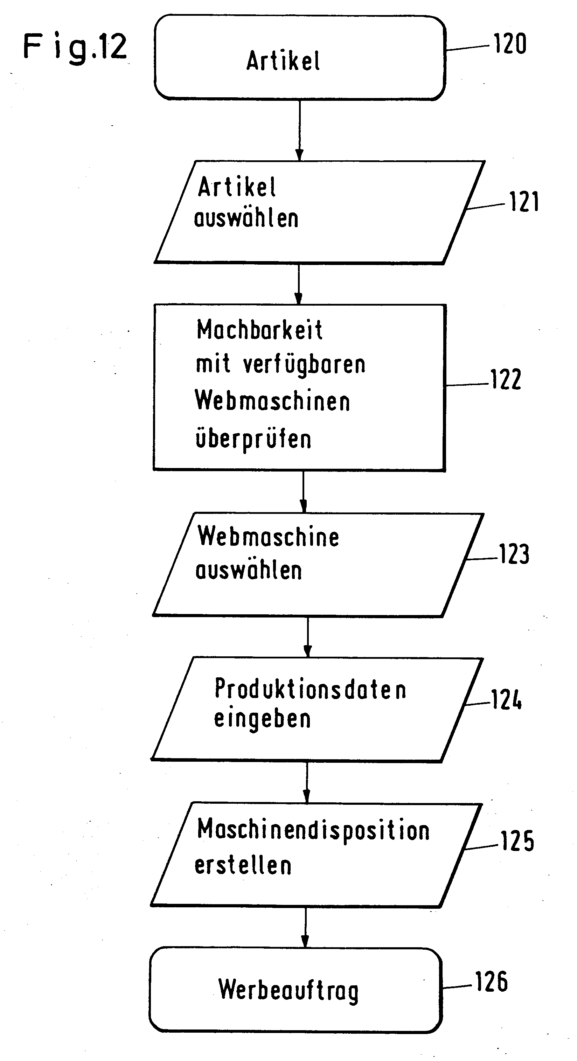

Der Ablauf zur vollständigen Beschreibung eines Webauftrages 69 sowie einer entsprechenden Webmaschinendisposition 64 ist in Fig. 12 dargestellt. Aus den verfügbaren, definierten Artikeln 120 wird der gewünschte Artikel aus einer Liste 121 ausgewählt. In folgenden Schritt wird die Machbarkeit 122 des Artikels mit den verfügbaren Webmaschinen abgeklärt. Vor dem Erstellen einer neuen Webmaschinendisposition 125 wird überprüft, ob mit den maschinentechnischen Möglichkeiten der verfügbaren Produktionsmittel, die durch die Webmaschinenspezifikation 66 der zu disponierenden Webmaschinen vorgegeben sind, den produktionstechnischen Anforderungen des zu webenden Artikels, die in der Gewebespezifikation 62 und der Gewebedisposition 61 festgelegt wurden, erfüllt werden können.

Machbarkeitskriterien stellen die gewebetechnischen Anforderungen den maschinentechnischen Möglichkeiten gegenüber.

Gewebetechnische Anforderungen:
- Breite der Gewebebahn
- Anzahl Gewebebahnen
- Breite im Webblatt
- Rapportlänge in Schussrichtung
- Anzahl benötigter Schäfte
- Steppfäden vorhanden
- Doppelschuss
- Leerschuss
- Anzahl Schussgarne
- Schussdichte
- Schussdichteverringerung
- Schussdichteerhöhung
- Flor

Maschinentechnische Möglichkeiten:
- minimale herstellbare Bahnenbreite
- maximal mögliche Anzahl Gewebebahnen
- minimale / maximale Breite im Webblatt

- maximale Rapportlänge des Fachbildeaggregates
- maximale Anzahl der Schäfte des Fachbildeaggregates
- Steppfadenvorrichtung vorhanden
- Farbsteueraggregat und Schussfadenwächter
- Schussdichteübersetzung
- Fransenzugvorrichtung
- Warenrückschaltsteuerung
- Frottierausrüstung

Unter der Machbarkeitsprüfung 122 ist ein Algorithmus zu verstehen, der untersucht, ob die produktionstechnischen Möglichkeiten des Produktionsmittels den Anforderungen des Produktes genügen und damit eine prinzipielle Produzierbarkeit sichergestellt ist.

Ergibt sich eine Machbarkeit des Artikels mit verfügbaren Webmaschinen so werden diese als Liste 123 angezeigt, und eine Webmaschine kann ausgewählt werden. Gemäss Fig.12 werden die erforderlichen Produktionsdaten 124, es sind dies Stücklänge und Anzahl der Stücke, eingegeben und daraufhin eine Maschinendisposition bestimmt.

Die Maschinendisposition 125 ist der Arbeitsschritt in dem das "Produktionsmittel Webmaschine" mit all seinen Freiheitsgraden bezüglich Einstellung (mechanisch und elektronisch) sowie Ausrüstung auf die produktionstechnischen Anforderungen der zu produzierenden Gewebebahn, die durch die Gewebedisposition bestimmt ist, eingestellt wird. Bei der Maschinendisposition 125 kann der Anwender aus den entsprechenden Varianten der projektierten Ausrüstungs- oder Dispositionsteile 65 selektieren. Der Anwender wird bei der Festlegung der Ausrüstungsteile hinsichtlich Konsistenz und Plausibilität in Bezug auf andere Ausrüstungsteile und textiltechnische Anfordrungen unterstützt, indem die im System abgelegten Hilfstexte, Erfahrungswerte in Form von Hilfetexten oder algorithmisch ableitbare Werte angeboten werden.

Die Webmaschinendisposition ist eng verknüpft mit der Webmaschinenspezifikation und der artikelspezifischen Webmaschinenausrüstung, da gewisse Einstellungen nur dann sinnvoll sind, wenn die entsprechenden Ausrüstungsteile oder Aggregate an der Webmaschine vorhanden sind. Zudem sind die mechanischen Einstellungen eng korreliert mit den elektronischen Einstellungen.

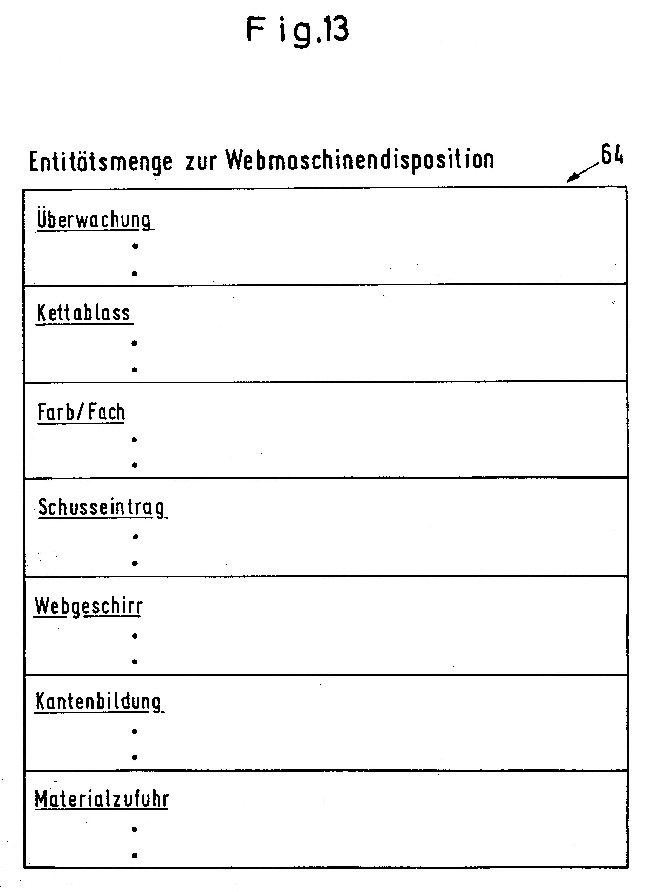

Die Entitätsmenge der Webmaschinendisposition 64 setzt sich aus ungefähr 350 Attributen zusammen, die nach den Oberbegriffen gemäss Fig.13 gegliedert sind. Die Werte der Attribute können durch drei Varianten zugeordnet werden:
- alle Werte neu eingeben
- Änderung einer bestehenden Webmaschinendisposition
- Verwendung einer unveränderten Webmaschinendisposition

Dabei werden alle Werte auf Konsistenz und Plausibilität geprüft.

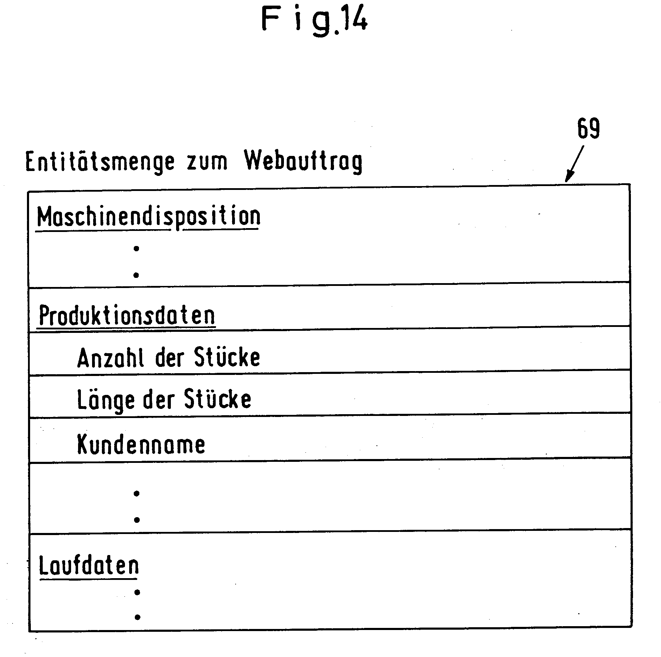

Nach erfolgter Maschinendisposition 125 liegt ein vollständiger, produktionsbereiter Webauftrag 69 vor, von dessen Attributen in Fig. 14 eine Auswahl dargestellt ist. Ein Webauftrag umfasst den zu produzierenden Artikel, die für die Produktion vorgesehene Webmaschine, die artikelspezifische Webmaschinendisposition sowie die Produktionsdaten. Die Webaufträge können gespeichert werden, womit eine Sammlung ausführbarer Webaufträge entsteht, auf die zu einem späteren Zeitpunkt wieder zugegriffen werden kann.

## Patentansprüche

1. Verfahren zum Herstellen von Geweben mit den Webmaschinen (6) eines Betriebs mit Hilfe eines Rechners (1) mit Bildschirm (2) und Tastatur (3), bei welchem

   die Leistungs- und Einstellmöglichkeits-Daten der Webmaschinen (6) mit Hilfe von Eingabemitteln in einem Speicher des Rechners (1) eingegeben und dort festgehalten werden;

   die Material-Daten von Geweben und die zu deren Herstellung notwendigen Maschinen-Einstelldaten und Maschinen-Ausrüstdaten mit Hilfe von Eingabemitteln in einem Speicher des Rechners (1) eingegeben und dort festgehalten werden;

   über Abfragemittel die charakteristischen Daten für das herzustellende Gewebe eingegeben werden;

   der Rechner (1) aus den Leistungs- und Einstellmöglichkeitsdaten und den über die Datenabfragemittel eingegebenen Daten, diejenigen Webmaschinen (6) ermittelt, welche für das Herstellen des Gewebes geeignet sind und

   die für die Herstellung des Gewebes notwendigen, spezifischen Maschineneinstelldaten ermittelt und der Maschine zugeführt werden.

2. Verfahren nach Anspruch 1 bei welchem auch die für das Gewebe notwendigen Daten für das Ausgangs-Material ermittelt werden.

3. Verfahren nach Anspruch 1 oder 2 bei welchem der Rechner (1) über eine Ausgabeeinheit nach für das herzustellende Gewebe notwendigen aber fehlenden, oder nicht eingegebenen charakteristischen Maschinen- und/oder Gewebe-Daten fragt.

4. Verfahren nach einem der Ansprüche 1 bis 3, bei dem die Webmaschinen (6) die vom Rechner (1) ermittelten und auf die Webmaschine übertragenen Einstellungen beim Weben selbsttätig verbessert und optimiert und die optimierten Einstell-Daten für ein Gewebe oder eine Maschine den Speichermitteln des Rechners (1) zugeführt werden.

5. Verfahren nach einem der Ansprüche 1 bis 4, bei dem das Auswählen und Einrichten von Webmaschinen auf Grund von Gewebedaten erfolgt, unter Verwendung einer Datenbank, wobei die Attribute der Datenbank in mehrere Kern-Entitäten (60-71) gegliedert sind, und das Gewebe durch die Entität Artikel (63) und den davon abhängenden Entitäten Gewebedisposition (61), Gewebespezifikation (62) und Garne (60) vollständig beschrieben ist, sodass ein Webauftrag (69) generiert wird, der alle Angaben für eine optimale Ersteinrichtung aller Webmaschineneinstellungen für die Produktion eines gewünschten Artikels umfasst, indem nach der Wahl des gewünschten Artikels aus der Menge der bekannten Artikel (63) diejenigen Webmaschinen angezeigt werden, die sich für die Produktion des gewählten Artikels eignen, woraus eine Webmaschine ausgewählt wird, die Produktionsdaten (Länge der Gewebebahn, Anzahl der Bahnen) eingegeben werden und die Webmaschinendisposition (64) erstellt wird, woraus ein Webauftrag (69) resultiert.

6. Verfahren nach einem der Ansprüche 1 bis 5, wobei das Gewebe durch die Entität Gewebespezifikation (62) webmaschinenunabhängig definiert ist.

7. Verfahren nach einem der Ansprüche 1 bis 6, wobei der Rechner (1) bei einer vorgegebenen Gewebespezifikation (62) und nach Eingabe des Webverfahrens (74), wie Luft Greifer oder Projektil, mit einem Algorithmus (75) die Machbarkeit des Gewebes mit dem gewählten Webverfahren überprüft, wobei der Rechner (1) auf die Entitätsmengen Gewebespezifikation (62) und Webmaschinenspezifikation (66) zurückgreift.

8. Verfahren nach einem der Ansprüche 1 bis 7, wobei das Gewebe (80) in die Bindungsbereiche Gewebegrund (85), Gewebekante (86) und Hilfskante (87) unterschieden wird, was dem Rechner (1) ermöglicht zu prüfen, ob die Kantenbildung korrekt eingestellt wurde.

9. Verfahren nach einem der Ansprüche 1 bis 8, wobei nach der Auswahl (121) eines zu produzierenden Artikels (120) der Rechner (1) mit einem Algorithmus (122) überprüft, welche Webmaschinen (6) die Herstellung des Artikels zulassen und diese zur Auswahl vorschlägt.

10. Verfahren nach einem der Ansprüche 1 bis 9, bei welchem der Rechner (1), falls sich ein Artikle (120) nach der Überprüfung der Machbarkeit (122) mit den verfügbaren Webmaschinen (6) nicht herstellen lässt, vorschlägt, welche Webmaschinen, Ausrüstungsteile, Aggregate, Rohstoffe oder Garne notwendig sind, um die Herstellung zu ermöglichen.

11. Verfahren nach einem der Ansprüche 1 bis 10, bei welchem die Dateneingabe jeweils auf Plausibilität und Konsistenz geprüft wird.

12. Vorrichtung zum Herstellen von Geweben mit den Webmaschinen (6) eines Betriebs nach einem Verfahren der Ansprüche 1 bis 11, dadurch gekennzeichnet, dass ein Rechner (1) mit Bildschirm (2), Tastatur (3) und Drucker (9) mit mindestens einer Webmaschine (6) Daten austauscht.

13. Vorrichtung nach Anspruch 12, dadurch gekennzeichnet, dass der Datenaustausch zwischen Rechner (1) und mindestens einer Webmaschine (6) mit einem transportablen Speichermedium (8) erfolgt.

14. Vorrichtung nach Anspruch 12, dadurch gekennzeichnet, dass der Datenaustausch zwischen Rechner (1) und mindestens einer Webmaschine (6) über eine Kommunikationsverbindung (4) erfolgt.

15. Vorrichtung nach einem der Ansprüche 12 bis 14, dadurch gekennzeichnet, dass der Rechner (1) eine Verbindung zu einem Leitsystem aufweist.

16. Webmaschinen dadurch gekennzeichnet, dass deren Betrieb nach einem der Verfahren der Ansprüche 1 bis 11 und mit einer der Vorrichtungen der Ansprüche 12 bis 15 erfolgt.

Fig.1

Personal-Computer

Bildschirm

Tastatur

Drucker

Kommunikationsverbindung

Webmaschinen Kontroller

Webmaschine

EP 0 518 810 A1

# Fig.2

# Fig.3

Webmaschine 6

Microprozessor 51

54

Anzeiger 55

Datenbus

Eingabeeinheit 53

52

Sensoren 56

Schalter/ Aktuatoren 57

4

5

EP 0 518 810 A1

Fig.4

# F i g.5

Entitätsmenge für Garne 60

| Material |
| --- |
| Garnerzeugung, - ausrüstung oder Veredelung |
| Farbe |
| Fadenstruktur |
| • <br> • <br> • <br> • |
| Garnnummer |

# Fig.6

Entitätsmenge zur Gewebespezifikation                           62

| |
|---|
| Garnmaterialien in Kette und Schuss |
| Bindung von Gewebegrund und Gewebekante |
| Fadenfolgen in Kette und Schuss |
| Kett - und Schuss-Dichten der Rohware |
| Gewebetyp ( Einfachgewebe, Doppelgewebe, Frottiergewebe) |
| • <br> • <br> • <br> • |
| Gewebedichten |
| Quadratmetergewicht roh |

**F i g.7**

```
┌──────────────────────────┐
│      Kundenauftrag       │────── 72
└──────────────────────────┘
             │
             ▼
      ╱──────────────────╲
     ╱  Gewebespezifikation ╲──── 73
     ╲     erstellen        ╱
      ╲──────────────────╱
             │
             ▼
      ╱──────────────────╲
     ╱ Webverfahren  L,G,P ╲──── 74
     ╲    auswählen        ╱
      ╲──────────────────╱
             │
             ▼
   ┌────────────────────┐
   │    Machbarkeit      │──── 75
   │     prüfen          │
   └────────────────────┘
             │
             ▼
         N   ◇ ──── 76
             │ J
             ▼
      ╱──────────────────╲
     ╱  Gewebedisposition  ╲──── 77
     ╲     erstellen       ╱
      ╲──────────────────╱
             │
             ▼
   ┌────────────────────┐
   │      Artikel        │──── 78
   └────────────────────┘
```

14

# Fig.8

# Fig.9

Entitätsmenge zur Gewebedisposition       61

| |
|---|
| Gewebebahnbeschreibung |
| Gewebebahnrohbreite |
| Einsprung |
| Anzahl der Bahnen |
| Anzahl der Webblätter |
| Kantenbildung |
| Kantentyp |
| Bindung für Hilfskante |
| Dreher oder Abbindefäden |
| Kettdichte der Hilfskante |
| Rohbreite der Hilfskante |
| Breite der Gassen |
| Einzug |
| Schafteinzug |
| Blatteinzug |
| Schlagpatrone |
| Einziehvorschrift für Schaft |
| Steppfadenposition |
| Symmetrierungsart der Bahn |
| •    • |

# F ig.10

Entitätsmenge zum Artikel 63

| Erstellungsdatum |
| --- |
| Name des Erstellers |
| letzte Änderung |
| Name des Änderers |

# Fig.11

Entitätsmenge zur Webmaschinenspezifikation ——66

| |
|---|
| <u>Webmaschinentyp</u> |
| Webverfahren |
| Typenreihe |
| Rohstoffart |
| Nennbreite |
| Bauart |
| Ausführung |
| Abschusswinkel |
| <u>Leistungsdaten</u> |
| maximale Drehzahl |
| maximale Schusseintragsleistung |
| maximale Webbreite im Blatt |
| Motornennleistung |
| <u>Fachbildeaggregat</u> |
| <u>Farbsteueraggregat</u> |
| <u>Projektilkreislauf</u> |
| Projektiltyp |
| Torsionsstab |
| <u>Schussfadenspeicher</u> |
| <u>Schussfadenbremse</u> |
| <u>Kettablassystem</u> |
| <u>Kettfadenwächtersystem</u> |
| <u>Schussfadenwächtersystem</u> |
| • • • |

18

Fig.12

Artikel ——— 120

Artikel auswählen ——— 121

Machbarkeit mit verfügbaren Webmaschinen überprüfen ——— 122

Webmaschine auswählen ——— 123

Produktionsdaten eingeben ——— 124

Maschinendisposition erstellen ——— 125

Werbeauftrag ——— 126

# F i g.13

Entitätsmenge zur Webmaschinendisposition  64

| |
|---|
| <u>Überwachung</u><br>•<br>• |
| <u>Kettablass</u><br>•<br>• |
| <u>Farb/Fach</u><br>•<br>• |
| <u>Schusseintrag</u><br>•<br>• |
| <u>Webgeschirr</u><br>•<br>• |
| <u>Kantenbildung</u><br>•<br>• |
| <u>Materialzufuhr</u><br>•<br>• |

# F i g.14

Entitätsmenge zum Webauftrag

69

| Maschinendisposition |
| :--- |
| • |
| • |
| Produktionsdaten |
| Anzahl der Stücke |
| Länge der Stücke |
| Kundenname |
| • |
| • |
| Laufdaten |
| • |
| • |

**Europäisches
Patentamt**

# EUROPÄISCHER RECHERCHENBERICHT

Nummer der Anmeldung

EP 92 81 0354

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | MELLIAND TEXTILBERICHTE Nr. 10, 1. Oktober 1990, Seiten 743 - 746; WERNER BUCK: 'integration von CAD/CAM und betriebsorg. in einer tuchfabrik' * das ganze Dokument * | 1-3,9, 12-15 | D03D51/00 G05B19/417 |
| Y | | 5-7,11 | |
| D,X | US-A-4 835 699 (JERRY F. MALLARD) * Spalte 11, Zeile 16 - Spalte 12, Zeile 24 * * Spalte 22, Zeile 37 - Spalte 24, Zeile 60; Abbildungen 1-14 * | 1,4,12, 14-16 | |
| Y | MELLIAND TEXTILBERICHTE Nr. 10, 1. Oktober 1990, Seiten 748 - 756; DR. KLAUS HARDT & DR. THOMAS FISCHER: 'Gewebesimulation und datenmodell...' * Seite 752, Zeile 6 - Seite 754, Zeile 42 * | 5-7,11 | |
| A | | 1-4,8-16 | **RECHERCHIERTE SACHGEBIETE (Int. Cl.5 )** G05B D03D |

Der vorliegende Recherchenbericht wurde für alle Patentansprüche erstellt

| Recherchenort | Abschlußdatum der Recherche | Prüfer |
|---|---|---|
| DEN HAAG | 25 AUGUST 1992 | HENNINGSEN O. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)